# NOUVEAU FASCICULE DE BREVET EUROPEEN

(11) **EP 2 864 268 B2**
(45) Date de publication et mention de la décision concernant l'opposition: **28.10.2020**
(45) Mention de la délivrance du brevet: 13.09.2017
(21) Numéro de dépôt: 13734688.8
(22) Date de dépôt: 25.06.2013
(51) Int. Cl.: C03C 17/36, G02B 5/08

(54) **PANNEAU RÉFLÉCHISSANT**
REFLEKTIERENDE TAFEL
REFLECTIVE PANEL

(30) Priorité: 26.06.2012 BE 201200435
(43) Date de publication de la demande: 29.04.2015
(73) Titulaire: AGC Glass Europe, 1348 Louvain-La-Neuve (BE)
(72) Inventeur: MAHIEU, Stijn, 9920 Lovendegem (BE)
(74) Mandataire: Agustsson, Sveinn Otto
(86) Numéro de dépôt international: PCT/EP2013/063180
(87) Numéro de publication internationale: WO 2014/001275

(56) Documents cités:
- EP-A1- 0 962 429
- EP-A1- 1 099 671
- WO-A1-02/42234
- WO-A2-2012/013796

## Description

La présente invention a trait à des panneaux réfléchissants, en particulier constitués d'un substrat revêtu d'un empilage de couches. Plus particulièrement, l'invention concerne un vitrage comportant un empilement de couches d'aspect réfléchissant et opaque, trempable thermiquement, c'est-à-dire apte à supporter des traitements thermiques du type trempe thermique, bombage, recuit, sans dégradation notable des propriétés du produit.

Les panneaux réfléchissants selon cette invention peuvent avoir diverses applications. Ils peuvent être utilisés comme panneaux de parement ou panneaux décoratifs réfléchissants, pour applications intérieures ou extérieures telles qu'éléments d'étagère, armoire, porte, revêtement de murs, plafonnier, support, table vitrée, applique, cloison, devanture de magasin, revêtement de façade, allège, dans des meubles, garde-robes ou salles-de-bain, dans des piscines ou des thermes, dans des boîtes de maquillage ou poudriers, dans l'industrie automobile, comme rétroviseurs de véhicules par exemple. De telles applications peuvent nécessiter des vitrages trempés thermiquement, pour des raisons de sécurité et pour augmenter leur résistance à la flexion et aux chocs.

De manière générale, pour bon nombre de ces applications, ce sont des miroirs à base d'argent qui sont utilisés, souvent produits par des procédés de chimie par voie humide ("wet-chemistry"). Selon ces procédés, une couche d'argent est déposée par réaction de réduction d'une solution ammoniacale de nitrate d'argent sur une feuille de verre plat ou bombé. Cette couche d'argent est ensuite recouverte d'une couche protectrice de cuivre ou traitée par une solution de passivation. Ensuite, une ou plusieurs couches de peinture sont déposées afin de produire le miroir fini. Ces différents éléments permettent de fournir au miroir des caractéristiques de vieillissement acceptables et une résistance mécanique et à la corrosion suffisante. De tels miroirs sont par exemple décrit dans le document FR2719839. Pour une application requérant un miroir trempé, il faut alors procéder au dépôt par voie humide sur un verre à dimension fixe, déjà trempé.

EP962429 décrit un vitrage comportant un empilement de couches d'aspect métallique réfléchissant et apte à supporter des traitements thermiques, déposé par pulvérisation cathodique. Il comporte une couche de base en diélectrique (SiO₂, Al₂O₃, SiON, Si₃N₄ ou AlN), une couche essentiellement métallique hautement réfléchissante (à base de Cr, d'un alliage contenant Cr ou d'un alliage contenant Al) et une couche de recouvrement extérieure en diélectrique (Si₃N₄, AlN). Les vitrages selon EP962429 présentent une réflexion lumineuse côté verre (RL_{V}) supérieure à 50% et une transmission lumineuse (TL) de 2 à 15%, de préférence de 4 à 10%. Pour fabriquer des vitrages opaques du type allège, EP962429 enseigne d'appliquer une couche supplémentaire de couleur (par exemple en émail) au-dessus de l'empilement de couches décrit plus haut.

Selon un de ses aspects, la présente invention a pour objet un substrat revêtu selon la revendication 1, les revendications dépendantes présentant des modes de réalisation préférés.

L'invention porte sur un substrat revêtu d'un empilage de couches comprenant, dans l'ordre, au moins (i) un substrat transparent, (ii) une première couche à base de chrome, ayant une épaisseur géométrique de 25 à 50 nm (iii) une couche diélectrique, en contact direct avec la première couche à base de chrome, l'épaisseur optique de ladite couche diélectrique étant comprise entre 100 et 200 nm et (iv) une seconde couche à base de chrome, en contact direct avec la couche diélectrique, dont l'épaisseur géométrique est comprise entre 50 et 150 nm.

De tels substrats revêtus, grâce au trio spécifique de couches chrome/diélectrique/chrome, ont l'avantage de fournir des panneaux:
▪ réfléchissants présentant une réflexion lumineuse côté verre RL_{V} >40%, de préférence >50%;
▪ opaques présentant une transmission lumineuse TL <2%, de préférence <1%, de préférence encore <0.5%;
▪ pouvant être utilisés aussi bien sans avoir subi de traitement thermique, qu'après traitement thermique;
▪ d'aspect neutre (-5<a*<5, de préférence -3<a*<3 et -5<b*<5, de préférence -3<b*<3 sous illuminant D65);
▪ mariables avec eux-mêmes dans leurs versions non traitée thermiquement et traitée thermiquement, en offrant une couleur côté verre qui ne change pas lors d'un traitement thermique (ΔE_{cmc} côté verre inférieur à 5, de préférence inférieur à 3);
▪ résistants aux tests de durabilité chimique habituels (test CASS, brouillard salin, brouillard humide, chambre climatique, Cleveland);
▪ par un procédé plus propre pour l'environnement (procédé de pulvérisation cathodique par comparaison avec un procédé par voie humide); et
▪ ne nécessitant pas de couche de peinture ou d'émail, généralement coûteuse, et évitant la présence de plomb, habituelle dans les peintures pour miroirs.

Le substrat transparent selon l'invention est de préférence un substrat verrier, par exemple du type verre flotté, sodo-calcique, clair, coloré ou extra-clair (c'est-à-dire à teneur en Fe moindre et à TL supérieure), pouvant présenter une épaisseur typiquement comprise entre 2 et 10 mm. Cependant l'invention peut également s'appliquer aux substrats plastiques, par exemple en PMMA. Il est nécessaire que le substrat soit transparent car, lorsqu'un tel panneau est utilisé, la lumière traverse une première fois le substrat, est réfléchie sur l'empilage de couches selon l'invention, puis traverse une seconde fois le substrat. Un utilisateur regardant son image dans un panneau réfléchissant selon l'invention se trouve donc à faire face au côté "substrat" du panneau, l'empilage de couches se situant sur l'autre face du substrat, opposée à l'utilisateur.

Par "couche à base de chrome", on entend une couche comprenant au moins 50% en poids de chrome, de préférence au moins 60%, au moins 70% ou au moins 80%, plus préférentiellement encore, comprenant au moins 90% en poids de chrome ou au moins 95%. Avantageusement, les couches à base de chrome consistent essentiellement en chrome, c'est-à-dire qu'elles consistent en chrome, mais qu'elles peuvent tout de même contenir d'autres composants mineurs, pourvu que ceux-ci n'affectent pas les caractéristiques essentielles de la composition de base.

De manière avantageuse, la couche diélectrique selon l'invention comprend, ou plus préférentiellement, consiste essentiellement en, un matériau présentant un coefficient d'absorption k à une longueur d'onde de 550 nm inférieur à 0.1 et un indice de réfraction n à une longueur d'onde de 550 nm compris entre 1.3 et 2.8. De préférence, la couche diélectrique comprend, ou consiste essentiellement en, un matériau choisi parmi les oxydes de zinc, les oxydes d'étain, les oxydes mixtes de zinc-étain, les oxydes de titane, les oxydes de silicium, les oxydes d'aluminium, les oxydes de zirconium, les oxydes de niobium, les nitrures d'aluminium, les nitrures de silicium, et les mélanges d'au moins deux d'entre eux. Les oxydes ou nitrures de silicium ou d'aluminium sont généralement préférés pour leur particulière résistance au traitement thermique. De façon plus préférée, la couche diélectrique consiste essentiellement en nitrure de silicium. Par "couche consistant essentiellement en nitrure de silicium", on entend également des couches dopées avec au moins un autre élément, contenant jusqu'à environ maximum 10% poids de cet au moins un autre élément, ces dernières présentant des propriétés diélectriques ne différant en pratique pas des couches de nitrure de silicium pur (par exemple, des couches déposées par procédé de pulvérisation cathodique à partir d'une cible de silicium contenant jusqu'à 10% poids d'aluminium). La couche diélectrique selon l'invention peut en outre être constituée de plusieurs couches individuelles comprenant ou consistant essentiellement en ces mêmes matériaux.

L'épaisseur géométrique de la première couche à base de chrome est d'au moins 25 nm; elle est d'au plus 50 nm et de préférence d'au plus 45 nm, plus préférentiellement d'au plus 40 nm. La première couche à base de chrome a pour principale fonction la réflexion et de telles épaisseurs conviennent particulièrement bien à cette fonction, en plus de répondre aux autres propriétés du panneau selon l'invention.

L'épaisseur optique de la couche diélectrique est de préférence d'au moins 100 nm ou d'au moins 110 nm, plus préférentiellement d'au moins 120 nm; elle est de préférence d'au plus 200 nm ou d'au plus 190 nm, plus préférentiellement d'au plus 180 nm. Pour mémoire, l'épaisseur optique d'une couche est le produit de l'épaisseur géométrique de la couche par l'indice de réfraction du matériau constituant la couche. La couche diélectrique a pour principales fonctions l'accroissement de la réflexion déjà obtenue par la première couche à base de chrome et l'ajustement de la couleur et donc la neutralité; de telles épaisseurs conviennent particulièrement bien à cette fonction, en plus de répondre aux autres propriétés du panneau selon l'invention. Si la couche diélectrique est constituée de plusieurs sous-couches, l'épaisseur de la couche diélectrique est égale à la somme des épaisseurs de ces couches individuelles. Dans le cas préféré d'une couche diélectrique consistant essentiellement en nitrure de silicium, l'épaisseur géométrique de cette dernière est de préférence comprise entre 50 et 100 nm, plus préférentiellement entre 60 et 90 nm.

L'épaisseur géométrique de la deuxième couche à base de chrome est d'au moins 50 nm et de préférence d'au moins 80 nm, plus préférentiellement d'au moins 100 nm et d'au plus 150 nm. Cette couche a pour principale fonction l'opacité du panneau. De telles épaisseurs conviennent particulièrement pour assurer cette opacité ainsi que la durabilité chimique et mécanique, en plus de répondre aux autres propriétés du panneau selon l'invention. Des épaisseurs supérieures à 150 nm n'apportent pas un réel avantage sur ces points, mais par contre engendre des coûts plus importants et des vitesses de dépôt moindres; elles ne sont donc pas avantageuses.

Dans certaines formes de l'invention, l'empilage de couches comprend en outre, comme dernière couche de l'empilage (côté opposé au substrat), une couche de protection consistant essentiellement en carbone, présentant de préférence une épaisseur géométrique comprise entre 1 et 10 nm. Cette couche permet d'apporter au panneau revêtu une protection mécanique supplémentaire avant traitement thermique, et est destinée à brûler lors du traitement thermique.

Dans d'autres modes de réalisation de l'invention, d'autres couches peuvent être présentes: que ce soit sur le substrat, sur la face opposée à celle portant l'empilage de couches selon l'invention (par exemple une couche anti-reflet), ou entre le substrat et la première couche à base de chrome (par exemple une couche barrière), ou encore au-dessus de la seconde couche de chrome (par exemple une couche améliorant la résistance à la griffe), pour peu que ces couches ne détériorent pas les propriétés de l'invention déjà citées.

Les substrats revêtus selon l'invention présentent une réflexion lumineuse côté verre (RL_{V} - D65 - 2°) d'au moins 40% ou au moins 45%, de préférence d'au moins 50%, voire au moins 52% ou au moins 54%, et ce avant et après éventuel traitement thermique. Leur transmission lumineuse (TL - D65) est inférieure à 2% ou à 1%, de préférence inférieure à 0.5%, et ce également avant et après éventuel traitement thermique.

Les substrats revêtus selon l'invention présentent en outre une teinte neutre lorsqu'ils sont examinés en réflexion côté verre, c'est-à-dire que les valeurs de a* et b* (valeurs CIELAB L*a*b* - D65 - 10°) sont telles que -5<a*<5 et -5<b*<5, de préférence -3<a*<3 et -3<b*<3. Qui plus est, cette teinte ne varie quasiment pas après traitement thermique. En effet, le ΔE_{cmc} (selon le "*Colour Measurement Committee of the Society of Dyes and Colourists of Great Britain*") côté verre entre un substrat revêtu avant traitement thermique et le même substrat revêtu après traitement thermique est inférieur à 5, de préférence inférieur à 3, c'est-à-dire invisible à l'œil nu. Tous les ΔE_{cmc} repris ici ont été mesurés et calculés en utilisant l'illuminant D65, observateur: 10°, l=1,35 et c=1,2.

Les substrats revêtus selon l'invention sont résistants aux tests de durabilité chimique habituels. Ils résistent ainsi:
▪ au test CASS selon la norme ISO 9227-2006, de préférence pendant au moins 5 jours;
▪ au brouillard salin (NSS: *Neutral Salt Spray*) selon la norme EN1096-2:2001, de préférence pendant au moins 20 jours;
▪ au brouillard humide (*condensation test*) selon la norme EN1036-2008, de préférence pendant au moins 20 jours;
▪ à la chambre climatique selon la norme EN1036-2008, de préférence pendant au moins 21 jours; et
▪ au test Cleveland selon la norme ISO 6270-1:1998, de préférence pendant au moins 15 jours;
et ce avant et après éventuel traitement thermique.

De préférence, ils sont compatibles et donc résistent chimiquement, avant et après éventuel traitement thermique, aux colles utilisées habituellement pour fixer les panneaux à un support (par exemple: colles alcoxy et colles acétiques), selon le test bain-marie décrit ci-dessous. De préférence, ils résistent aussi au test de traction décrit ci-dessous.

Avantageusement, ils présentent également une bonne durabilité mécanique et sont résistants:
▪ au test AWRT (*Automatic wet rub test*)*,* décrit ci-dessous, de préférence pendant au moins 1000 cycles;
▪ au test DBT (*Dry Brush test*) selon la norme ASTM D2486-00 (méthode de test "A"), de préférence pendant au moins 1000 cycles; et
▪ au test feutre (*Felt*) selon la norme EN1096-2:2001, de préférence pendant au moins 500 cycles;
et ce avant et après éventuel traitement thermique.

Les couches selon l'invention sont avantageusement déposées sur le substrat par un système de dépôt physique de vapeur (PVD: *Physical vapour déposition*), par exemple sous-vide, par pulvérisation cathodique réactive, assistée par champ magnétique.

### Test AWRT (Automatic wet rub test)

Un piston recouvert d'un tissu en coton maintenu humide est mis en contact avec la couche à évaluer et oscille sur sa surface. Le piston porte un poids de manière à appliquer une force de 33N sur un doigt de 17 mm de diamètre. L'abrasion du coton sur la surface revêtue va endommager (enlever) la couche après un certain nombre de cycles. Le test est utilisé pour définir la limite avant que la couche ne se décolore (enlèvement partiel de la couche) et que des griffes n'apparaissent dans la couche. Le test est réalisé pour 10, 50, 100, 250, 500 et 1000 cycles, à divers endroits séparés sur l'échantillon. L'échantillon est observé sous un ciel artificiel pour déterminer si une décoloration ou des griffes peuvent être vues sur l'échantillon en réflexion. Le résultat AWRT indique le nombre de cycles ne donnant pas ou très peu de dégradation (non visible à l'œil nu sous un ciel artificiel uniforme à 80 cm de distance de l'échantillon).

### Test bain-marie

Un plot de colle avec un diamètre d'environ 5 cm est déposé sur l'arrière d'un échantillon (côté couches) de 10x10cm. L'épaisseur de colle est réglée à 2 mm. Les échantillons testés sont immergés dans un bain-marie immédiatement après application de la colle. La température de l'eau du bain-marie est réglée sur 35°C. Pour chaque famille d'adhésifs, un bain-marie séparé est utilisé. La durée du test est de 20 jours. Les résultats de ce test sont évalués selon quatre catégories:
- inacceptable: une modification de haze est notée lorsque l'échantillon est observé à la lumière du jour;
- limite: une modification de haze est notée lorsque l'échantillon est observé dans une chambre noire, sous une lumière diffuse;
- acceptable: une modification du haze est notée lorsque l'échantillon est observé dans une chambre noire, sous une lumière dirigée;
- OK: aucune modification du haze n'est notée.

### Test de traction

Deux échantillons sont collés l'un à l'autre (par leur face revêtue de couches) au moyen d'un plot de colle ayant un diamètre d'environ 2 cm et sont laissés sécher. L'épaisseur de la colle est réglée à 2 mm. L'ensemble est ensuite soumis à une force de traction visant à les séparer l'un de l'autre. La valeur de la force appliquée nécessaire pour les séparer selon une rupture cohésive, c'est-à-dire une rupture au sein de la colle (par opposition à une rupture adhésive, c'est-à-dire un séparation entre la colle et les couches) est notée. Celle-ci est de préférence supérieure ou égale à 3 kg/cm2.

Des modes de réalisation particuliers de l'invention vont à présent être décrits, en tant qu'exemples. Les propriétés ont été mesurées sous illuminant D65.

### Exemple 1

Sur une ligne industrielle de revêtement sous vide, un substrat en verre flotté sodo-calcique d'une épaisseur d'environ 4 mm est revêtu par pulvérisation cathodique assistée par champ magnétique, d'un empilage de couches, formant donc un substrat revêtu présentant la structure suivante:
verre / Cr [33nm] / Si₃N₄ [74nm] / Cr [110nm]
(les épaisseurs données entre crochets sont des épaisseurs géométriques).

Il montre une RL_{V} de 55% et une couleur en réflexion côté verre caractérisée par L*= 79.1, a*= -2 et b*= -1.8. Qui plus est, la couleur est angulairement stable, c'est-à-dire qu'elle ne varie pas selon l'angle d'observation du panneau (voir Table I).

**Table I**

| Angle d'observation | ΔL* | Δa* | Δb* | stabilité angulaire ΔE_{cmc} |
|---|---|---|---|---|
| référence: 8° | - | - | - | - |
| 15° | 0,2 | -0,1 | 0,0 | 0,14 |
| 25° | 0,3 | -0,2 | 0,1 | 0,29 |
| 35° | 0,5 | -0,3 | 0,2 | 0,49 |
| 45° | 0,5 | -0,3 | 0,3 | 0,65 |
| 55° | 0,4 | -0,3 | 0,3 | 0,65 |

Après divers traitement thermiques à 670°C pendant différents temps, la couleur en réflexion côté verre ne change pas. La Table II montre les variations de RL_{V}, L*, a*, b* et le ΔE_{cmc} côté verre entre le panneau avant et après traitement thermique.

**Table II**

| Durée traitement thermique (670°C) | ΔL* | Δa* | Δb* | ΔRL_{V} | ΔE_{cmc} |
|---|---|---|---|---|---|
| 7 min | -0,2 | -0,2 | -0,7 | -0,39 | 0,9 |
| 9 min | -0,3 | -0,3 | -0,6 | -0,49 | 0,9 |
| 11 min | -2,5 | -0,1 | 0,9 | -4,13 | 1,8 |
| 13 min | -2,4 | -0,1 | 0,8 | -3,93 | 1,7 |
| 17 min | -4,3 | -0,1 | 1,6 | -7,04 | 3,2 |

Qui plus est, la couleur après traitement thermique est aussi angulairement stable. La table III montre les variations selon l'angle d'observation sur un échantillon après traitement thermique pendant 9 minutes à 670°C (échantillon à l'origine à température ambiante, puis placé 9 minutes dans une étuve à 670°C - traitement simulant largement une trempe thermique).

**Table III**

| Angle d'observation | ΔL* | Δa* | Δb* | stabilité angulaire ΔE_{cmc} |
|---|---|---|---|---|
| référence: 8° | - | - | - | - |
| 15° | 1,4 | -0,1 | -0,2 | 0,80 |
| 25° | 1,6 | -0,2 | -0,1 | 0,88 |
| 35° | 1,5 | -0,3 | 0,0 | 0,85 |
| 45° | 0,5 | -0,3 | 0,3 | 0,56 |
| 55° | -0,2 | -0,3 | 0,2 | 0,45 |

Des échantillons de ce substrat revêtu, certains non soumis à un traitement thermique, d'autres après avoir subi un traitement thermique, ont tous passé avec succès les différents tests de durabilité chimique et mécanique cités plus haut:
▪ test CASS 5 jours;
▪ brouillard salin 20 jours;
▪ brouillard humide 20 jours;
▪ chambre climatique 21 jours; et
▪ test Cleveland 15 jours;
▪ compatibilité OK et résistance à la traction (≥3kg/cm²) avec les colles alcoxy et colles acétiques;
▪ test AWRT 1000 cycles: pas ou très peu de dégradation (à l'œil nu sous un ciel artificiel uniforme à 80 cm de distance de l'échantillon);
▪ test DBT (Dry Brush test) 1000 cycles: pas ou très peu de dégradation (à l'œil nu sous un ciel artificiel uniforme à 80 cm de distance de l'échantillon);
▪ test Felt 500 cycles;

### Exemples 2 à 5

D'autres empilages, dans lesquels la couche diélectrique est formée de plusieurs sous-couches distinctes, ont été simulés sur un verre de 4 mm. Ces empilages montrent également une bonne réflexion et une bonne neutralité (Table IV).

**Table IV**

| empilage de couches (épaisseurs géométriques en nm) | | | | | RL_{V} | L* | a* | b* |
|---|---|---|---|---|---|---|---|---|
| Cr | Si₃N₄ | ZSO5 | Cr | | 55 | 79,1 | -2 | -1,8 |
| 33 | 37 | 37 | 110 | | | | | |
| Cr | Si₃N₄ | SiO₂ | Cr | | 55 | 79,1 | -2 | -1,7 |
| 33 | 50 | 28 | 110 | | | | | |
| Cr | Si₃N₄ | ZSO5 | Si₃N₄ | Cr | 55,1 | 79,1 | -2 | -1,8 |
| 33 | 30 | 14,3 | 30 | 110 | | | | |
| Cr | Si₃N₄ | SiO₂ | Si₃N₄ | Cr | 55,1 | 79,1 | -2 | -1,6 |
| 33 | 30 | 25,7 | 30 | 110 | | | | |

| | | | | | | | | |
|---|---|---|---|---|---|---|---|---|
| (ZSO5 = oxyde mixte de zinc et d'étain, dans une proportion 50-50% poids) | | | | | | | | |

### Exemple 6

Un vitrage selon l'exemple 1 a été revêtu d'une couche supplémentaire de carbone de 5 nm d'épaisseur au-dessus de la seconde couche de chrome. Ce vitrage, soumis aux tests AWRT et DBT, montre une résistance supérieure à ceux sans couche de carbone: aucune dégradation observée après 1000 cycles (à l'œil nu sous un ciel artificiel uniforme à 80 cm de distance de l'échantillon).

## Revendications

1. Substrat revêtu d'un empilage de couches comprenant, dans l'ordre, au moins:
i. un substrat transparent
ii. une première couche à base de chrome dont l'épaisseur géométrique est comprise entre 25 et 50 nm,
iii. une couche diélectrique, en contact direct avec la première couche à base de chrome, l'épaisseur optique de ladite couche diélectrique étant comprise entre 100 et 200 nm,
iv. une seconde couche à base de chrome, en contact direct avec la couche diélectrique et dont l'épaisseur géométrique est comprise entre 50 et 150 nm.

2. Substrat revêtu selon la revendication 1, **caractérisé en ce que** les couches à base de chrome consiste essentiellement en chrome.

3. Substrat revêtu selon la revendication 1 ou la revendication 2, **caractérisé en ce que** la couche diélectrique comprend un matériau présentant un coefficient d'absorption k à une longueur d'onde de 550 nm inférieur à 0.1 et un indice de réfraction à une longueur d'onde de 550 nm compris entre 1.3 et 2.8.

4. Substrat revêtu selon l'une des revendications précédentes, **caractérisé en ce que** la couche diélectrique comprend un matériau choisi parmi les oxydes de zinc, les oxydes d'étain, les oxydes mixtes de zinc-étain, les oxydes de titane, les oxydes de silicium, les oxydes d'aluminium, les oxydes de zirconium, les oxydes de niobium, les nitrures d'aluminium, les nitrures de silicium, et les mélanges d'au moins deux d'entre eux.

5. Substrat revêtu selon l'une des revendications précédentes, **caractérisé en ce que** la couche diélectrique consiste essentiellement en nitrure de silicium.

6. Substrat revêtu selon l'une des revendications précédentes, **caractérisé en ce que** l'épaisseur géométrique de la première couche à base de chrome est comprise entre 15 et 50 nm, de préférence entre 25 et 40 nm.

7. Substrat revêtu selon l'une des revendications précédentes, **caractérisé en ce que** l'épaisseur géométrique de la seconde couche à base de chrome est d'au moins 50 nm, de préférence d'au moins 80 nm.

8. Substrat revêtu selon l'une des revendications précédentes, **caractérisé en ce que** l'épaisseur optique de la couche diélectrique est comprise entre 120 et 180 nm.

9. Substrat revêtu selon la revendication 5, **caractérisé en ce que** l'épaisseur géométrique de la couche diélectrique est comprise entre 50 et 100 nm, de préférence entre 60 et 90 nm.

10. Substrat revêtu selon l'une des revendications précédentes, **caractérisé en ce que** l'empilage de couches comprend en outre, comme dernière couche de l'empilage, une couche de protection consistant essentiellement en carbone.

11. Substrat revêtu selon la revendication 10, **caractérisé en ce que** la couche de protection consistant essentiellement en carbone présente une épaisseur géométrique comprise entre 1 et 10 nm.

12. Substrat revêtu selon l'une des revendications précédentes, **caractérisé en ce qu'**il présente une réflexion lumineuse côté verre d'au moins 40%.

## Patentansprüche

1. Substrat, das mit einem Stapel von Schichten beschichtet ist, umfassend in dieser Reihenfolge mindestens:
i. ein transparentes Substrat
ii. eine erste Schicht auf der Basis von Chrom, deren geometrische Dicke zwischen 25 und 50 nm beträgt,
iii. eine dielektrische Schicht in direktem Kontakt mit der ersten Schicht auf der Basis von Chrom, wobei die optische Dicke der dielektrischen Schicht zwischen 100 und 200 nm beträgt,
iv. eine zweite Schicht auf der Basis von Chrom, deren geometrische Dicke zwischen 50 und 150 nm beträgt, in direktem Kontakt mit der dielektrischen Schicht.

2. Beschichtetes Substrat nach Anspruch 1, **dadurch gekennzeichnet, dass** die Schichten auf der Basis von Chrom im Wesentlichen aus Chrom bestehen.

3. Beschichtetes Substrat nach Anspruch 1 oder Anspruch 2, **dadurch gekennzeichnet, dass** die dielektrische Schicht ein Material umfasst, das einen Absorptionskoeffizienten k bei einer Wellenlänge von 550 nm von weniger als 0,1 und einen Brechungsindex bei einer Wellenlänge von 550 nm zwischen 1,3 und 2,8 aufweist.

4. Beschichtetes Substrat nach einem der vorhergehenden Ansprüche, **dadurch gekennzeichnet, dass** die dielektrische Schicht ein Material umfasst, das aus Zinkoxiden, Zinnoxiden, gemischten Zink-Zinn-Oxiden, Titanoxiden, Siliziumoxiden, Aluminiumoxiden, Zirkonoxiden, Nioboxiden, Aluminiumnitriden, Siliziumnitriden und den Gemischen von mindestens zwei von ihnen ausgewählt wird.

5. Beschichtetes Substrat nach einem der vorhergehenden Ansprüche, **dadurch gekennzeichnet, dass** die dielektrische Schicht im Wesentlichen aus Siliziumnitrid besteht.

6. Beschichtetes Substrat nach einem der vorhergehenden Ansprüche, **dadurch gekennzeichnet, dass** die geometrische Dicke der ersten Schicht auf der Basis von Chrom zwischen 25 und 40 nm beträgt.

7. Beschichtetes Substrat nach einem der vorhergehenden Ansprüche, **dadurch gekennzeichnet, dass** die geometrische Dicke der zweiten Schicht auf der Basis von Chrom mindestens 80 nm beträgt.

8. Beschichtetes Substrat nach einem der vorhergehenden Ansprüche, **dadurch gekennzeichnet, dass** die optische Dicke der dielektrischen Schicht zwischen 120 und 180 nm beträgt.

9. Beschichtetes Substrat nach Anspruch 5, **dadurch gekennzeichnet, dass** die geometrische Dicke der dielektrischen Schicht zwischen 50 und 100 nm, vorzugsweise zwischen 60 und 90 nm beträgt.

10. Beschichtetes Substrat nach einem der vorhergehenden Ansprüche, **dadurch gekennzeichnet, dass** der Stapel von Schichten als letzte Schicht des Stapels außerdem eine Schutzschicht aufweist, die im Wesentlichen aus Kohlenstoff besteht.

11. Beschichtetes Substrat nach Anspruch 10, **dadurch gekennzeichnet, dass** die im Wesentlichen aus Kohlenstoff bestehende Schutzschicht eine geometrische Dicke zwischen 1 und 10 nm aufweist.

12. Beschichtetes Substrat nach einem der vorhergehenden Ansprüche, **dadurch gekennzeichnet, dass** es eine glasseitige Lichtreflexion von mindestens 40% aufweist.

## Claims

1. Substrate coated with a stack of layers comprising, in order, at least:
i. a transparent substrate;
ii. a first chromium-based layer the geometric thickness of which is comprised between 25 and 50 nm; and
iii. a dielectric layer making direct contact with the first chromium-based layer, the optical thickness of the dielectric layer being comprised between 100 and 200 nm,
iv. a second chromium-based layer making direct contact with the dielectric layer and the geometric thickness of which is comprised between 50 and 150 nm.

2. Coated substrate according to Claim 1, **characterized in that** the chromium-based layers essentially consist of chromium.

3. Coated substrate according to Claim 1 or Claim 2, **characterized in that** the dielectric layer comprises a material having an absorption coefficient k at a wavelength of 550 nm lower than 0.1, and a refractive index at a wavelength of 550 nm comprised between 1.3 and 2.8.

4. Coated substrate according to one of the preceding claims, **characterized in that** the dielectric layer comprises a material chosen from zinc oxides, tin oxides, mixed zinc-tin oxides, titanium oxides, silicon oxides, aluminum oxides, zirconium oxides, niobium oxides, aluminum nitrides, silicon nitrides and mixtures of at least two thereof.

5. Coated substrate according to one of the preceding claims, **characterized in that** the dielectric layer essentially consists of silicon nitride.

6. Coated substrate according to one of the preceding claims, **characterized in that** the geometric thickness of the first chromium-based layer is comprised between 25 and 40 nm.

7. Coated substrate according to one of the preceding claims, **characterized in that** the geometric thickness of the second chromium-based layer is at least 80 nm.

8. Coated substrate according to one of the preceding claims, **characterized in that** the optical thickness of the dielectric layer is comprised between 120 and 180 nm.

9. Coated substrate according to Claim 5, **characterized in that** the geometric thickness of the dielectric layer is comprised between 50 and 100 nm and preferably between 60 and 90 nm.

10. Coated substrate according to one of the preceding claims, **characterized in that** the stack of layers furthermore comprises, by way of last layer of the stack, a protective layer essentially consisting of carbon.

11. Coated substrate according to Claim 10, **characterized in that** the protective layer essentially consisting of carbon has a geometric thickness comprised between 1 and 10 nm.

12. Coated substrate according to one of the preceding claims, **characterized in that** it has a glass-side light reflectance of at least 40%.
